# EUROPÄISCHE PATENTSCHRIFT

(11) **EP 1 913 066 B1**
(45) Veröffentlichungstag und Bekanntmachung des Hinweises auf die Patenterteilung: **13.06.2012**
(21) Anmeldenummer: 06776407.6
(22) Anmeldetag: 26.07.2006
(51) Int. Cl.: C08K 5/00, C08K 5/04, C08K 5/10, C08K 5/101, C08K 5/103, C08K 5/105, C08K 5/107, C08K 5/20, C08K 5/34, C08K 5/3412, C08K 5/3442, C08K 5/3467, C08L 59/00, C08L 59/02, C08L 59/04

(54) **EMISSIONSARME, TRIBOLOGISCH MODIFIZIERTE POLYOXYMETHYLEN-FORMMASSEN UND DARAUS HERGESTELLTE FORMTEILE**
LOW-EMISSION, TRIBOLOGICALLY MODIFIED POLYOXYMETHYLENE MOULDING COMPOUNDS AND MOULDINGS PRODUCED FROM THEM
MATIERES DE MOULAGE EN POLYOXYMETHYLENE, DEGAGEANT PEU D'EMISSIONS ET TRIBOLOGIQUEMENT MODIFIEES, ET PIECES MOULEES A BASE DE CES MATIERES

(30) Priorität: 28.07.2005 DE 102005035334
(43) Veröffentlichungstag der Anmeldung: 23.04.2008
(73) Patentinhaber: Ticona GmbH, 65451 Kelsterbach (DE)
(72) Erfinder: DISCH, Stefan, 79215 Elzach (DE); WITAN, Kurt, 65719 Hofheim (DE); KURZ, Klaus, 65451 Kelsterbach (DE)
(74) Vertreter: von Kreisler Selting Werner
(86) Internationale Anmeldenummer: PCT/EP2006/007348
(87) Internationale Veröffentlichungsnummer: WO 2007/012469

(56) Entgegenhaltungen:
- EP-A- 0 465 086
- EP-A- 0 562 856
- DE-A1- 10 126 787
- US-A1- 2002 183 430
- US-A1- 2003 162 912
- US-A1- 2003 195 280
- US-B1- 6 590 020

## Beschreibung

Die vorliegende Erfindung betrifft tribologisch modifizierte Polyoxymethylen Formmassen, die zur Herstellung von Formteilen oder Extrudaten geeignet sind. Die damit hergestellten Produkte sind besonders stabil bei der Verarbeitung und zeichnen sich durch geringe Formaldehydemission, defektfreie Oberflächen und hervorragende tribologische Eigenschaften aus.

Seit ihrer Markteinführung vor etwa 40 Jahren haben sich Polyoxymethylene (POM) als äußerst nützliche technische Werkstoffe in vielen Anwendungen durchgesetzt. Besonders als Konstruktionswerkstoff im Automobilbau, in der Elektroindustrie und in der Medizintechnik findet POM breite Anwendung. Dabei wird von POM-Formmassen ein bestimmtes Niveau an mechanischen Eigenschaften wie Steifigkeit, Härte und Zähigkeit gefordert, das den Einsatz dieser Materialien für technische Bauteile wie Zahnräder, Hebel und viele andere erst möglich macht. Die geforderten Werte für die Streckspannung liegen dabei zwischen 60 und 70 N/mm², für den Zug-E-Modul von unmodifizierten Copolymeren zwischen 2400 und 3100 N/mm². Für die Bruchdehnung werden Werte zwischen 10 und 30 % gefordert.

Besonders in Anwendungen, bei denen sich Kunststoffe gegen Metall oder andere Kunststoffe bewegen (tribologische Anwendungen), z.B. Zahnräder oder Gleitelemente im Automobilbau, hat sich der Einsatz von Polyoxymethylenen als sehr vorteilhaft erwiesen. Im Vergleich zu anderen Kunststoffen zeichnen sich Polyoxymethylene durch geringen Verschleiß, eine niedrige Reibungszahl und geringe Geräuschentwicklung beim Gleiten aus. Der Grund hierfür liegt in den speziellen Strukturmerkmalen des Polyoxymethylens, insbesondere dessen linearen Polymerketten mit hoher Kristallinität. Schon unmodifizierte Polyoxymethylen-Typen zeigen diese Vorzüge gegenüber anderen Kunststoffen.

Für den Einsatz in bewegten technischen Systemen mit besonders hohen Anforderungen werden schon seit langer Zeit modifizierte Polyoxymethylene eingesetzt, die tribologisch wirksame Additive enthalten, die z.B. die Reibungszahl verändern oder eine besonders geringe Geräuschentwicklung bewirken. Wesentlich dabei ist, dass die Modifizierungsmittel die stark polaren Eigenschaften von Polyoxymethylen abschwächen. Für diese Zwecke werden eine Reihe von unpolaren Polymeren eingesetzt, wie z.B. Polytetrafluorethylen, Polyethylen oder Polyethylen ultrahohen Molekulargewichts. Auch gepfropfte Polymere werden eingesetzt, die neben unpolaren auch polare Polymersegmente enthalten. In EP-A-0354802 und EP-A-0420564 wird z.B. ein auf Polyethylen gepfropftes Styrol-Acrylnitril Copolymer, z.B. LDPE-SAN, einem Polyoxymethylen zugesetzt und die tribologischen Eigenschaften beschrieben. In US-4,556,690 wird eine tribologisch modifizierte Polyacetal-Formmasse beschrieben, die als Additiv ein Polymer enthält, das ein gepfropftes Copolymerisat eines Alpha-Olefin Polymers mit einer ungesättigten Carbonsäure oder deren Derivate ist.

Nachteilig dabei ist allerdings, dass Polyoxymethlyene empfindlich auf den Zusatz solcher Fremdstoffe reagiert (z.B. Damm, W. und Herrmann, E., in Gächter, Müller; Plastic Additives, 3. Ausgabe 1989, S. 730). Auch der Zusatz tribologisch wirksamer Additive führt dazu, dass bei der Verarbeitung Materialabbau mit nachfolgender Formaldehydfreisetzung auftreten kann, was die Einsetzbarkeit des Materials zur Herstellung von Formteilen stark beeinträchtigt. Verunreinigungen in tribolgisch wirksamen Additiven wie Restmonomere oder Lösungsmittel werden bei der Verarbeitung von tribologisch modifizierten Polyoxymethylen-Formmassen und während des Gebrauchs der daraus hergestellten Formteile freigesetzt. Die Emission von Formaldehyd und Verunreinigungen der tribologisch modifizierten Additive führt zu einem unangenehmen Geruch, was den Einsatz dieser Materialien in vielen Anwendungsfeldern beeinträchtigt. Die Automobilindustrie als einer der wichtigsten Märkte für Produkte aus POM hat spezielle Analysenmethoden für die Bestimmung der Formaldehydemission aus POM-Formteilen entwickelt (VDA Empfehlung Nr. 275, Dokumentation Kraftfahrwesen e.V. Juli 1994).

Weiterhin haben die Anforderungen an tribologisch modifizierte Polyoxymethylen Formmassen in Bezug auf die Verarbeitbarkeit in den letzten Jahren stetig zugenommen. Zum einen wird zur Herstellung von Formteilen aus Polyoxymethylen für den Einsatz im Automobil-, Elektro- und Medizintechnikbereich zunehmend die Heißkanaltechnologie bei Spritzgusswerkzeugen eingesetzt. Zum anderen werden sowohl die Spritzgusswerkzeuge als auch die Formteilgeometrien zunehmend komplexer. Diese Entwicklungen führen dazu, daß tribolgogisch modifizierte Polyacetal-Formmassen bei der Verarbeitung höheren Temperaturen ausgesetzt sind, was bei bisher kommerziell erhältlichen tribologisch modifizierten Polyacetal Formmassen zusätzlich zu verstärkten Abbauprozessen, zu hohen Formaldehydemissionen, zu Defekten auf der Formteiloberfläche und zu einer Beeinträchtigung des tribologischen Eigenschaftsprofils führt.

Damit es bei der Verarbeitung von tribologisch modifizierten POM-Formmassen zu keiner Beeinträchtigung der Produkt- und Materialeigenschaften kommt, muss der Materialabbau in tribologisch modifizierten POM-Formmassen unterdrückt werden. Zu diesem Zweck werden Stabilisatoren zugesetzt. In EP-A-0354802 wird als Fließhilfsmittel eine aliphatische Säure, ein Alkohol oder ein aliphatischer Ester mit mindestens 12 C-Atomen eingesetzt. Ansonsten werden für Polyoxymethylene übliche Stabilisatorsysteme verwendet. In EP-A-0156285 werden als Stabilisatoren für die Polyacetalphase Polyamide, Amide mehrbasiger Carbonsäuren, Amidine, Hydrazine, Poly(N-vinyllactame) und Erdalkalisalze von aliphatischen, vorzugsweise hydroxylgruppenhaltigen, ein- bis dreibasigen Carbonsäuren mit 2-20 Kohlenstoffatomen genannt. Die dort beschriebenen Stabilisatoren und Stabilisatorsysteme, können zwar eine gewisse Verminderung der Formaldehydemission bewirken, führen allerdings in aller Regel zu einer Beeinträchtigung des mechanischen und tribologischen Eigenschaftsprofils des Polyoxymethylenformteils.

In WO 02/26884 wird eine Kombination aus einem zyklischen stickstoffhaltigen Stabilisator und einem Salz einer Carbonsäure als Stabilisator für Polyoxymethylenformmassen enthaltend einen Schlagzähmodifikator beschrieben. Darüber hinaus können zusätzlich Oxidationsstabilisatoren und Lichtstabilisatoren eingesetzt werden. Da beschriebenen Stabilisatorsysteme sind in der Lage die Formaldehydemission aus Schlagzähmodifikatoren enthaltenden Polyoxymethylenen zu reduzieren, ohne dass die mechanischen Eigenschaften des Formteils darunter leiden. Eine weiter verbesserter Verminderung der Formaldehydemission speziell von Farbmittel enthaltenden Polyoxymethylenen konnte mit einem dreikomponentigem Stabilisatorsystem aus einem zyklischen, stickstoffhaltigen Stabilisator, einem Esters aus einem mehrwertigen Alkohol und Fettsäuren und einem Metallsalzes einer Fettsäure erreicht werden (WO 02/26885).

US-A1-2003/0195280 offenbart eine Polyoxymethylenformmasse, umfassend 0.1 bis 5,0 Gew.-% Farbstoff, 0,01 bis 0,5 Gew.-% eines Stickstoff enthaltenden Stabilisierungsmittels, 0,05 bis 1 Gew.-% eines Esters von einem Polyol und einer Fettsäure und 0,001 bis 0,5 Gew.-% eines Metallsalzes einer Fettsäure.

US-A1-2003/0162912 offenbart eine Polyoxymethylenformmassenzusammensetzung umfassend 0,01 bis 1,0 Gew.-% eines cyclischen Stabilisierungsmittels, 0,001 bis 0,5 Gew.-% eines Carbonsäuresalzes, 5 bis 50 Gew.-% eines Schlagzähmodifikators, 0,0 bis 2,0 Gew.-% eines sterisch gehinderten Phenols, 0,0 bis 1,0 Gew.-% eines Stabilisators sowie 0,0 bis 0,8 Gew.-% eines sterisch gehinderten Amins als Lichtstabilisators.

US-A1-2002/0183430 offenbart eine Polyoxymethylenharzzusammensetzung, umfassend 100 Gew.-Teile eines Polyoxymethylenharzes, 0,01 bis 5 Gew.-Teile mindestens eines Polymers, ausgewählt von Homopolymeren des N-Vinylcarbonsäureamids und Copolymeren von N-Vinylcarbonsäureamiden und 0,01 bis 5 Gew.-% einer Komponente, ausgewählt aus der Gruppe der Polyalkylenglykole, Fettsäureamide, Fettsäureester und Dicarbonsäureester.
(A) 0,01-1,0 Gew.-% eines zyklischen Stabilisators, der mindestens ein Stickstoffatom im Ring enthält,
(B) 0,001-4,5 Gew.-% eines Salzes einer Carbonsäure,
(C) 5-50 Gew.-% eines Schlagzähmodifikators,
(D) 0,0-2,0 Gew.-% einer sterisch gehinderten Phenolverbindung,
(E) 0,0-1,0 Gew.-% mindestens eines Stabilisators aus der Gruppe der Benzotriazolderivate oder Benzophenonderivate oder aromatische Benzoatderivate,
(F) 0,0-0,8 Gew.-% eines sterisch gehinderten Amins zur Lichtstabilisierung (HALS),
(G) ad 100 Gew.-% eines Polyoxymethylen-Polymeren.

EP-A2-562 856 offenbart eine Polyoxymethylenzusammensetzung, die 0,01 bis 5 Gew.-% eines sterisch gehinderten Phenols, 0,01 bis 10 Gew.-% eines Melamin-Formaldehydpolykondensats und 0,05 bis 4 Gew.-% eines Fettsäureesters eines Polyols.

EP-A1-465 086 offenbart ein Oxymethylencopolymer, umfassend 100 Gew.-Teile eines Oxymethylencopolymers, 0,01 bis 2 Gew.-% eines Esters eines Polyols mit einer höheren Fettsäure und 0,01 bis 3 Gew.-% eines Erdalkalimetallsalzes einer Fettsäure.

US-B1-6,590,020 offenbart eine thermoplastische Polyoxymethylenformmasse, umfassend 10 bis 99,98 Gew.-% eines Polyoxymethylenhomo- oder -copolymers, 0,005 bis 2 Gew.-% eines sterisch gehinderten Phenols, 0,001 bis 2 Gew.-% eines Polyamids, 0,002 bis 2 Gew.-% eines Erdalkalimetallsilikats oder eines Erdalkalimetallglycerophosphats, 0,01 bis 5 Gew.-% eines Esters oder eines Amids einer gesättigten oder ungesättigten aliphatischen Carbonsäure mit 10 bis 40 Kohlenstoffatomen mit Polyolen oder Aminen, die 2 bis 40 Atome aufweisen, 0 bis 5 Gew.-% eines Melamin-/Formaldehydkondensats sowie 0 bis 74 Gew.-% weiterer Additive.

Die Aufgabe der vorliegenden Erfindung besteht nun darin, tribologisch modifizierte POM-Formmassen zur Verfügung zu stellen, in denen die bislang beobachtete Formaldehydemission unter Erhalt des mechanischen und tribologischen Eigenschaftsprofils wesentlich vermindert ist. Die Formteile, die aus diesen Formmassen hergestellt werden, sollen darüber hinaus einen geringen Geruch aufweisen.

Es hat sich nun überraschend gezeigt, dass die Verwendung eines Stabilisatorsystems aus einem zyklischen, stickstoffhaltigen Stabilisator und mindestens einem Esters aus einem mehrwertigen Alkohol und mindestens einer (C₁₀-C₃₂)-Fettsäure besonders geeignet ist, um die Formaldehydemission weiter zu reduzieren, ohne dass die guten tribologischen Eigenschaften der modifizierten Formmasse darunter leiden. Zusätzlich können weitere Stabilisatoren wie z.B. Antioxidantien, insbesondere sterisch gehinderte Phenolverbindungen und Metallsalze von Fettsäuren zugesetzt werden.

Folglich ist Gegenstand der vorliegenden Erfindung eine Verwendung eines Stabilisatorsystems, enthaltend
(B) 0.01 - 0.5 Gew. % einer heterozyklischen Verbindung mit mindestens einem Stickstoffatom im Ring enthält und
(C) 0.05 - 1 Gew. % mindestens eines Esters aus einem mehrwertigen Alkohol und mindestens einer (C₁₀-C₃₂)-Fettsäure
zur Reduktion der Formaldehydemission aus Polyoxymethylen-Formmassen oder -Formteilen für tribologische Anwendungen, wobei die Polyoxymethylen-Formmassen oder -Formteile 0.1 - 50.0 Gew. % eines tribologischen Modifikators (A) enthalten, der ausgewählt ist aus der Gruppe der Polytetrafluorethylene, der Molybdänsulfide, der Calciumcarbonate, der Pfropf-Copolymere, die ein Olefinpolymer als Pfropfgrundlage und darauf aufgepfropft mindestens ein Polymer aus der Gruppe der Polyvinyle und Polyether enthalten, der Pfropf-Copolymere, die einen kautschukelastischen Kern auf Basis eines Polydiens und eine harte Pfropfhülle aus einem (Meth)acrylat und/oder (Meth)acrylnitril aufweisen, der ultrahochmolekulares Polyethylen-Pulver, der Stearylstearate, der Esterwachse aus einer Fettsäure und einem einwertigen Alkohol, der Polyethylenwachse, der Amidwachse oder einer Mischung der genannten Modifikatoren.

Die Formmasse bzw. das Formteil kann darüber hinaus weitere Komponenten, wie z.B.
(A) bis zu 0.5 Gew. %, bevorzugt bis zu 0,2 Gew. % eines Metallsalzes einer (C₁₀-C₃₂)-Fettsäure,
(B) bis zu 1 Gew. %, bevorzugt bis zu 0,5 Gew. % eines Metallsalzes einer (C₁-C₉)-Carbonsäure,
(C) bis zu 1.0 Gew. % eines Antioxidationsmittels, bevorzugt einer sterisch gehinderten Phenolverbindung,
(D) bis zu 1.0 Gew. % mindestens eines weiteren Stabilisators, bevorzugt aus der Gruppe der Benzotriazolderivate oder Benzophenonderivate oder aromatische Benzoatderivate,
(E) bis zu 0.5 Gew. % eines Lichtstabilisators, bevorzugt eines sterisch gehinderten Amins (HALS),
enthalten.

Soweit explizit nichts anderes angegeben wird beziehen sich die Gew. % -Angaben auf das Gesamtgewicht der Formmasse bzw. des Formteils.

Die Polyoxymethylen-Formmasse und die daraus resultierenden Formteile weisen eine außerordentlich geringe Formaldehydemission und eine gute Stabilität, auch bei hohen Temperaturen, auf. Es zeigt sich zudem, dass Formteile, die aus den Formmassen hergestellt werden, ein hervorragendes mechanisches und tribologisches Eigenschaftsprofil aufweisen.

Darüber hinaus sind die beschriebenen Stabilisatorsysteme besonders geeignet, um Polyoxymethylen-Formmassen bzw. -Formteile enthaltend oxidierte bzw. oxidationsanfällige tribologische Modifikatoren zu stabilisieren. In dieser Hinsicht ist es insbesondere von Vorteil, den Zusatz von Antioxidantien zu begrenzen, die häufig eine Verschlechterung der tribologischen und mechanischen Eigenschaften nach sich ziehen und durch die genannte Stabilisatorkombination zu ersetzen oder vorzugsweise zu ergänzen. Ein weiterer Vorteil des eingesetzten Stabilisatorsystems liegt darin, dass die Polyoxymethylenformmasse bzw. das resultierende Formteil in einem neutralen bis leicht basischen Zustand gehalten werden kann, was der Verringerung der Formaldehydemission ebenfalls förderlich ist. In diesem Zusammenhang sind bevorzugte Formmassen bzw. Formteile weitgehend frei von Hydroxiden, Alkoxiden, anorganischen Säuren, insbesondere frei von deren Alkali oder Erdalkalimetallsalzen. Dabei wird unter "weitgehend frei" eine Menge von unter 0,1 Gew. %, bevorzugt von unter 0,01 Gew. % verstanden.

Als tribologische Modifikatoren (A), die der Polyoxymethylen-Formmasse zugesetzt werden können, sind insbesondere 0.1 - 50.0 Gew. % der Stoffe (A1) bis (A11) zu nennen. Die tribologischen Modifikatoren (A1) bis (A11) können dabei einzeln oder als Mischung eingesetzt werden.
(A1) 0.1 - 50.0 Gew. %, bevorzugt 1.0 - 25 Gew. % eines Polytetrafluorethylen-Pulvers (z.B. Dyneon PA 5951, Hersteller Dyneon, Deutschland)
(A2) 0.1 - 10.0 Gew. %, bevorzugt 0.2 - 5 Gew. %, besonders bevorzugt 0.5 - 2 Gew. % eines Molybdändisulfid (MoS₂)-Pulvers
(A3) 0.1 - 50.0 Gew. %, bevorzugt 1.0 - 25 Gew. % eines Calciumcarbonat (Kreide)-Pulvers (z.B. Ca-Carbonat SL-101, Firma Shiraishi, Japan)
(A4) 0.1 - 50 Gew. %, bevorzugt 1.0 - 25.0 Gew %, besonders bevorzugt 2.0 % bis 10 Gew. % eines Propf-Copolymeren, das ein Olefinpolymer als Pfropfgrundlage und darauf ein gepfropft mindestens ein Vinylpolymer oder ein Etherpolymer aufweist, und/oder ein Pfropf-Copolymer, das einen kautschukelastischen Kern auf Basis von Polydienen und eine harte Pfropfhülle aus (Meth)acrylaten und/oder (Meth)acrylnitrilen aufweist.
   Solche Pfropf-Cpoplymeren sind in EP-A-354,802 und EP-A-420,564 bzw. in EP-A-156,285 und EP-A-668,317 beschrieben.
   Als Pfropf-Grundlage für die Pfropf-Copolymeren des ersten Typs eignen sich grundsätzlich alle Olefin-Polymeren oder Olefin-Copolymeren, z.B. Homopolymere wie Polyethylen oder Polypropylen, oder Copolymere, die aus copolymerisierbaren ethylenisch ungesättigten Monomeren abgeleitet sind, wie z.B. Ethylen-Propylen-Copolymere, Ethylen-1-Buten-Copolymere oder Copolymere abgeleitet von Ethylen und Glycidyl-(meth)acrylat.
   Als Propfmonomere eignen sich im Prinzip alle ethylenisch ungesättigten Monomeren mit polaren Gruppen oder andere pfropfbaren Monomeren mit polaren Gruppen, welche die Polarität der im wesentlichen unpolaren Pfropfgrundlage modifizieren, z.B. ethylenisch ungesättigte Carbonsäuren wie (Meth)acrylsäure und deren Derivate wie Ester, Nitrile oder Amide, gegebenenfalls in Kombination mit Comonomeren, wie Acrylnitril oder die Kombination von Styrol mit Acrylnitril.
   Besonders bevorzugt ist ein Pfropf-Copolymer auf der Basis von Polyethylen oder Polypropylen gepfropft mit Acrylnitril oder mit Styrol/Acrylnitril. Derartige Produkte sind bekannt und im Handel erhältlich, z.B. das Produkt Modiper A 1401 der NOF Corporation, Tokio, Japan.
   Bevorzugte Pfropf-Grundlagen für die Pfropf-Copolymeren des zweiten Typs sind Polybutadien, Polyisopren und/oder Polybutadien/Styrol. Als PropfMonomere eignen sich prinzipiell alle ethylenisch ungesättigten Monomeren. Vorzugsweise handelt es sich dabei um ethylenisch ungesättigte Monomere mit polaren Gruppen, wie bereits weiter oben für die Herstellung von (A4) des ersten Typs beschrieben.
   Besonders bevorzugt sind Pfropf-Copolymere auf Basis von Polybutadien und einer zweischaligen Pfropfhülle aus Polystyrol und Polymethacrylat. Derartige Produkte sind bekannt und im Handel erhältlich. Ein Beispiel dafür ist das Produkt Paraloid EXL 2600 der Firma Rohm und Haas Deutschland GmbH, Frankfurt am Main.
(A5) 0.1 - 50.0 %, bevorzugt 1.0 % bis 25.0 % eines ultrahochmolekularen Polyethylen-Pulvers mit Molekularewicht > 10⁶ g/mol. Derartige Produkte sind bekannt und im Handel erhältlich. Ein Beispiel dafür ist das Produkt GUR 4120 der Firma Ticona GmbH, Kelsterbach, Deutschland.
(A6) 0.1 %. - 10.0 Gew. %, bevorzugt 0.2 - 5.0 Gew. %, besonders bevorzugt 0.5 - 3 Gew. % Stearylstearat (z.B. Unister M9676, Hersteller NOF, Japan)
(A7) 0.1 % - 10 Gew. %, bevorzugt 0.5 - 5.0 Gew. %, besonders bevorzugt 0.8 - 2.0 Gew. % eines Silikonöls. Um die Migration von Silikonöl aus den Formteilen zu unterdrücken, ist es vorteilhaft, ein Silikonöl mit Molekulargewicht > 20000 g/mol zu verwenden.
   Es können prinzipiell alle bei Raumtemperatur flüssigen Polysiloxane zum Einsatz kommen, sofern diese ein Molekulargewicht von mindestens 20000 g/mol, bevorzugt von 25000 bis 300000 g/mol aufweisen. Typische Viskositäten der Silikonöle bei 25°C liegen im Bereich von 500 bis 300000 mm²/s. Besonders bevorzugt handelt es sich um Dialkylpolysiloxane, insbesondere um Dimethylpolysiloxane. Produkte dieses Typs sind beispielsweise unter der Bezeichnung Silikonöle AK (Hersteller Wacker Chemie GmbH, Deutschland) im Handel (z.B. Silikonöl 200 Fluid 30000 CS).
(A8) 0.1 % - 5.0 Gew. %, bevorzugt 0.5 % bis 3.0 Gew. % eines oxidierten Polyethylen-Wachses (z.B. Licowachs PED 191, Hersteller Clariant GmbH, Deutschland)
(A9) 0.1 % - 5.0 Gew. %, bevorzugt 0.2 - 2.0 Gew. % eines Amidwachses (z.B. Licowachs C, Hersteller Clariant GmbH, Deutschland)
(A10) 0.1 % - 5.0 Gew. %, bevorzugt 0.5 - 3.0 Gew. % eines aliphatischen Esterwachses aus einer Fettsäure und einem einwertigen Alkohol (z.B. Loxiol P1206, Hersteller Cognis, Deutschland)
(A11) 0.1 % - 5.0 Gew. %, bevorzugt 0.5 - 3.0 Gew. % eines Polyethylenwachs (z.B. PE 520, Firma Clariant, Deutschland)

Bevorzugt werden Polyoxymethylen-Formmassen mit den hier beschriebenen Stabilisatorsystemen versehen, die oxidierbare oder teiloxidierte tribologische Modifikatoren enthalten. Solche Modifikatoren sind z.B. PTFE (A1), Molybdänsulfid (A2), Propfcopolymere (A4), ultrahochmolekulare Polyethylen-Pulver (A5), Stearylstearat (A6) oder oxidierbare Wachse gemäß (A9), (A10) oder (A11).

Die Formmasse bzw. die daraus hergestellten Formteile enthalten 0.01 - 0.5 %, bevorzugt 0.03 - 0.3 %, eines zyklischen Stabilisators (B), der mindestens ein Stickstoffatom, bevorzugt ein oder zwei Stickstoffatom, im Ring enthält. Als Stabilisatoren geeignet sind heterocyclische Verbindungen mit mindestens einem Stickstoffatom als Heteroatom, welches entweder mit einem aminosubstituierten Kohlenstoffatom oder einer Carbonylgruppe benachbart ist, wie zum Beispiel Pyridazin, Pyrimidin, Pyrazin, Pyrrolidon, Aminopyridin und davon abgeleitete Verbindungen. Vorteilhafte Verbindungen dieser Gattung sind Aminopyridin und dessen Derivate. Geeignet sind prinzipiell alle Aminopyridine, wie zum Beispiel Melamin, 2,6-Diaminopyridin, substituierte und dimere Aminopyridine und aus diesen Verbindungen hergestellte Mischungen. Vorteilhaft sind weiter Polyamide und Dicyandiamid, Harnstoff und seine Derivate sowie Pyrrolidon und davon abgeleitete Verbindungen. Beispiele für geeignete Pyrrolidone sind zum Beispiel Imidazolidinon und davon abgeleiteteVerbindungen, wie zum Beispiel Hydantoin, dessen Derivate besonders vorteilhaft sind, insbesondere vorteilhaft sind von diesen Verbindungen Allantoin und seine Derivate. Besonders vorteilhaft sind weiter Triamino-1,3,5-Triazin (Melamin) und seine Derivate, wie zum Beispiel Melamin-Formaldehydkondensate und Methylolmelamin. Ganz besonders bevorzugt sind Melamin, Methylolmelamin, Melamin-Formaldehydkondensate und Allantoin. Die stickstoffhaltigen Stabilisatoren können einzeln oder in Kombination verwendet werden.

Als Komponente (C) werden 0.05 - 1 Gew. %, bevorzugt 0.1 - 0.5 Gew. % eines Esters aus einem mehrwertigen Alkohol und mindestens einer (C₁₀-C₃₂)-Fettsäure (C), Ester aus höheren Fettsäuren mit 24 - 32 C-Atomen und mehrwertigen Alkoholen mit 2 - 8 C-Atomen, besser mit 2 - 5 C-Atomen, sind bevorzugt. Die Säuren müssen nicht vollständig verestert sein, sondern können auch nur teilweise verestert bzw. die Ester teilweise verseift sein. Besonders bevorzugte mehrwertige Alkohole sind Glycerin, Pentaerythritol oder Glykole, insbesondere Alkylenglykole oder Dialkylenglykole wie z.B. Ethylenglykol, Diethylenglykol oder Butylenglykol.

Unter den Fettsäuren werden Montansäuren besonders bevorzugt. Ganz besonders bevorzugte Ester sind Diester aus Glykol oder Glycerin und Montansäuren (z.B. Licowachs E und Licolub WE4, Hersteller Clariant AG).

Die weiteren Bestandteile, Komponenten (D) bis (H), der Formmassen bzw. Formteile sind optional und müssen nicht unbedingt enthalten sein, um das geforderten Eigenschaftsprofil zu erreichen. Jede dieser Komponenten verbessert jedoch mindestens eine der Eigenschaften geringe Emission, Farbstabilität und mechanische Langzeit-Eigenschaften.

Als Komponente (D) sind bis zu 0.5 Gew. %, bevorzugt 0,001 - 0.2 %, besonders bevorzugt 0,01 bis 0.1 % eines Metallsalzes einer Fettsäure (D) in der Formmasse enthalten. Es können Alkali- und Eralkalimetallsalze oder Salze anderer zweiwertiger Metallionen, z.B. Zn²⁺, von langkettigen Fettsäuren mit 10 bis 32 C-Atomen, beispielsweise Stearate, Laurate, Oleate, Behenate, Montanate, Palmitate eingesetzt werden. Die Fettsäuren können sowohl ungesättigt als auch gesättigt sein und können auch mit Hydroxy- oder Aminogruppen substituiert sein. Bevorzugt sind Erdalkali- und Zinksalze der Stearinsäure und der Montansäuren.

Als Komponente (E) können 0,0 - 1.0 Gew. %, bevorzugt 0,01-0,05 Gew.%, besonders bevorzugt 0.05 - 0.2 Gew. % eines Metallsalzes einer kurzkettigen Carbonsäure (E) enthalten sein. Alle ein- und zweiwertigen Metallionen sind möglich, Alkali- und Erdalkalimetalle sind jedoch bevorzugt. Die kurzkettigen Carbonsäuren besitzen 3 - 8 C-Atome. Bevorzugt sind Propionate, Citrate und Pyruvate. Besonders bevorzugt ist Calciumcitrat.

Die Formmasse kann 0.0 bis 1.0 Gew. %, bevorzugt 0.0 - 0.4 %, besonders bevorzugt 0.0 - 0.1 %, einer sterisch gehinderten Phenolverbindung (F) enthalten. Beispiele solcher handelsüblicher Verbindungen sind Pentaerithrityl-tetrakis -[3-(3,5-di-tert.butyl-hydroxyphenyl)-propionat] (Irganox 1010, Firma Ciba Geigy, Schweiz), Triethylenglykol-bis-[3-(3-tert.butyl-4-hydroxy-5-methylphenyl)-propionat] (Irganox 245, Firma Ciba Geigy, Schweiz), 3,3'-bis[3-(3,5-di-tert.butyl-4-hydroxyphenyl)-propionohydrazid] (Irganox MD 1024, Fa. Ciba Geigy, Schweiz), Hexamethylenglykol-bis-[3-(3,5-di-tert.butyl-4-hydroxyphenyl)-propionat] (Irganox 259, Firma Ciba Geigy, Schweiz), 3,5-di-tert.butyl-4-hydroxytoluol (Lowinox BHT, Firma Great Lakes). Bevorzugt sind Irganox 1010 und vor allem Irganox 245.

Weiterhin kann die Formmasse 0.0 - 1.0 Gew. %, bevorzugt 0,01 - 0,9 Gew. %, besonders bevorzugt 0.02 - 0.8 Gew.-% mindestens eines Stabilisators aus der Gruppe der Benzotriazolderivate oder Benzophenonderivate oder aromatische Benzoatderivate (G) enthalten. Bevorzugt ist 2-[2'-Hydroxy-3',5'-bis(1,1-dimethylbenzyl)phenyl]-benzotriazol, das als Tinuvin 234 (Firma Ciba Geigy, Schweiz) im Handel erhältlich ist.

Als Komponente (H) können 0.0 - 0.5 Gew. %, bevorzugt 0,01-0,4 Gew.-%, ganz besonders bevorzugt 0,4 Gew.-% eines sterisch gehinderten Amins zur Lichtstabiliserung (HALS) (H) in der erfindungsgemäßen Formmasse enthalten sein. Bevorzugt sind 2,2,6,6-tetramethyl-4-piperidyl-Verbindungen, z.B. Bis-(2,2,6,6-tetramethyl-4-piperidyl)-sebazat (Tinuvin 770, Firma Ciba Geigy, Schweiz) oder das Polymer aus Bemsteinsäuredimethylester und 1-(2-Hydroxyethyl)-4-hydroxy-2,2,6,6-tetramethyl-4-piperidin (Tinuvin 622, Firma Ciba Geigy, Schweiz).

Die als Basismaterial für die eingefärbten Formmassen verwendeten Polyoxymethylen Polymere (I) können Polyoxymethylenhomo- oder copolymere sein. Derartige Polymere sind dem Fachmann bekannt und in der Literatur beschrieben. Die Homopolymere werden im allgemeinen durch Polymerisation von Formaldehyd oder Trioxan hergestellt, wobei die Polymerisation kationisch oder anionisch initiiert werden kann. Bevorzugt sind jedoch Polyoxymethylencopolymere, die neben Oxymethyleneinheiten noch Oxyalkyleneinheiten enthalten, wobei die Alkylengruppen 2 -8 Kohlenstoffeinheiten, linear oder verzweigt, enthalten können. Besonders bevorzugt sind Polyoxymethylenpolymere, die im wesentlichen Oxymethylen- und Oxyethyleneinheiten in der Polymerkette aufweisen. Der Anteil der Oxyethyleneinheiten an den Struktureinheiten der Polymerkette beträgt 0.1 bis 15 mol %, vorzugsweise 0.2 bis 10 mol %. Der Schmelzindex MFI, gemessen nach ISO 1133 bei 190°C und 2.16 kg Auflagegewicht, beträgt 0,5 -75 g/10 min, bevorzugt 2-60 g/10 min und besonders bevorzugt von 5-35 g/10 min. Das Zahlenmittel des Molekulargewichts beträgt mindestens 5000 g/mol und höchstens 100000 g/mol, bestimmt durch GPC in Dimethylacetamid bei 150 bis 160 °C. An Stelle eines einzelnen POM-Copolymerisats ist auch eine Mischung von verschiedenen, unterschiedlich zusammengesetzten Polyoxymethylen-Copolymeren verwendbar. Die Herstellung der POM-Copolymere kann mit allgemein bekannten Herstellungsverfahren erfolgen. Ein mögliches Verfahren ist beispielsweise die Copolymerisation von Trioxan mit Dioxolan in Gegenwart allgemein üblicher Mengen von BF3 und Methylal.

Die Formmasse kann weitere übliche Zusatzstoffe einzeln oder als Gemisch bis zu 40 Gew. % enthalten, z.B. Nukleierungsmittel wie Polyoxymethylen Terpolymere oder Talk, Füllstoffe wie Glaskugeln, Wollastonit, Lehm oder Graphit, anorganische oder organische Fasern wie Glasfasern, Carbonfasern oder Aramidfasern und thermoplastische oder duroplastische Kunststoffadditive oder Elastomere wie Polyethylen, Polyurethan, Polymethylmethacrylat, Polybutadien, Polystyrol.

Eine besonders bevorzugte Ausgestaltung der Erfindung stellen tribologische Modifikatoren enthaltende Polyoxymethylen -Formmassen dar, die als Stabilisatorsystem neben einer Komponente (B), mindestens zwei synergistisch wirkende Komponenten (C) enthält.

Die Komponente (C) stellt dabei eine Mischung aus
(C1) x Gew. % eines unverseiften Esters aus einem mehrwertigen Alkohol und mindestens einer (C₁₀-C₃₂)-Fettsäure und
(C2) y Gew. % eines teilverseiften Esters eines mehrwertigen Alkohols und mindestens einer (C₁₀-C₃₂)-Fettsäure,
wobei x größer als 0.01 Gew.-%, y kleiner als 0.99 Gew.-% und die Summe aus x und y kleiner als 1.0 Gew.-% ist, besonders bevorzugt liegt der Wert von x und y unabhängig voneinander zwischen 0,03 Gew. % und 0,5 Gew. %, besonders bevorzugt zwischen 0,5 Gew. % und 0,2 Gew. %.

Modifizierte Polyoxymethylen-Formmassen enthaltend als Stabilisator die genannten Komponente (B), (C1) und (C2) zeichnen sich durch eine besonders geringe Formaldehydemission aus.

Als Komponente (C1) werden unverseifte Ester aus höheren Fettsäuren mit 10 - 32 C-Atomen, bevorzugt 24 - 32 C-Atomen, und mehrwertigen Alkoholen mit 2 - 8 C-Atomen, bevorzugt 2 - 5 C-Atomen eingesetzt. Die mehrwertigen Alkohole müssen nicht vollständig verestert sein, sondern können auch teilweise verestert sein. Bevorzugte mehrwertige Alkohole sind Glycerin, Pentaerythritol oder Glykole, insbesondere Alkylenglykole oder Dialkylenglykole wie z.B. Ethylenglykol, Diethylenglykol oder Butylenglykol. Unter den Fettsäuren sind Montansäuren bevorzugt. Besonders bevorzugte Ester sind Diester aus Glykol oder Glycerin und Montansäuren (Licowachs E und Licolub WE4, Hersteller Clariant AG).

Als Komponente (C2) werden teilverseifte Ester aus höheren Fettsäuren mit 10 - 32 C-Atomen, bevorzugt 24 - 32 C-Atomen, und mehrwertigen Alkoholen mit 2 - 8 C-Atomen, bevorzugt 2 - 5 C-Atomen verwendet. Die teilverseiften Ester können durch Reaktion eines vollständigen Esters mit einer Base hergestellt werden. Es können auch Gemische von teilverseiften Estern eines teilweise veresterten mehrwertigen Alkohols mit einem Metallsalz der entsprechenden Fettsäuren eingesetzt werden. Bevorzugte mehrwertige Alkohole sind auch hier Glycerin, Pentaerythritol oder Glykole, insbesondere Alkylenglykole oder Dialkylenglykole wie z.B. Ethylenglykol, Diethylenglykol oder Butylenglykol. Unter den Fettsäuren sind hier ebenfalls Montansäuren bevorzugt. Bevorzugte Metalle sind solche, die als ein- oder zweiwertige Ionen vorkommen, z.B. Alkali- und Erdalkalimetalle. Besonders bevorzugt ist ein teilverseifter Ester aus Butylenglykol und Montansäuren, wobei überschüssige Montansäureeinheiten mit Calciumhydroxyd verseift sind (z.B. Licowachs OP, Hersteller Clariant AG).

Die vorliegende Erfindung betrifft die Verwendung der beschriebenen Stabilisatorsysteme zur Reduktion der Formaldehydemission bei der Herstellung von tribologischen Modifikatoren enthaltenden Polyoxymethlyen-Formmassen oder-Formteilen. Insbesondere dann wenn Formmassen bzw. die Formteile bei der Herstellung oder bei der Anwendung hohen Temperaturen ausgesetzt werden.

Die tribologisch modifizierten POM-Formmassen können mit den üblichen und bekannten Mischverfahren wie Granulierung, Extrusion, Kneten etc. hergestellt werden. Bevorzugt werden die erfindungsgemäßen Formmassen hergestellt, indem Polyoxymethylen Polymer mit den tribologischen Modifikatoren und Stabilisatoren vermischt und die Mischung anschließend granuliert wird.

Die tribologisch modifizierten POM-Formmassen verfügen über eine wesentlich verminderte Emission. Die Verminderung der Formaldehydfreisetzung kann schon bei der Herstellung der Formmasse, z.B. beim Granulieren, und auch bei der Verarbeitung beobachtet werden. Somit leistet die erfindungsgemäße Polyoxymethylen Zusammensetzung einen Beitrag zur Arbeitshygiene und - sicherheit. Vor allem ist jedoch die Formaldehydemission von Formteilen, die durch Spritzguss oder Extrusion hergestellt wurden, wesentlich reduziert. So beträgt die Formaldehydemission, gemessen an Platten der Wandstärke 1 mm nach 24 h Lagerdauer nach VDA 275 im allgemeinen weniger als 30 mg/kg, vorzugsweise weniger als 20 mg/kg.

Die mechanischen Eigenschaften der Formmassen entsprechen den üblichen Anforderungen an handelsübliche Polyoxymethylen-Formteile für tribologische Anwendungen, so dass die für POM üblichen Anwendungsfelder und Verarbeitungstechniken ohne Einschränkung genutzt werden können. Die Formmassen eigenen sich somit besonders zur Herstellung von Formteilen für mechanische Elemente, wie z.B. Gleitelemente.

Besondere Anwendungsgebiete für die Formmassen sind Gleitelemente in Verkehrsmitteln wie Automobile, Flugzeuge etc, Haushaltswaren, Spielzeugartikeln, Babyartikeln sowie elektronischen und elektrotechnischen Bauteilen und Geräten. Beispiele sind Führungs- und Gleitbuchsen, Zahnräder, Getriebe, Transportketten, Nocken- und Kurvenscheiben, Reißverschlüsse, Schalter, Roll- und Gleitführungen, Drehfallen für Autoschlösser, Scheibenwischeranlagen, oder Führungen für Autofensterheber. Weiterhin sind die Formmassen geeignet zur Herstellung von Apparaturen und Instrumenten, oder Teilen davon, für medizinische Anwendungen. Die hergestellten Formmassen weisen im Vergleich zu den derzeit handelsüblichen Produkten die geringste Formaldehydemission auf, bei der Beibehaltung der für Polyoxymethylene typischen mechanischen Eigenschaften.

Im folgenden wird die vorliegende Erfindung anhand einiger Ausführungsbeispiele näher erläutert.

In den anschließenden Beispielen wurden die Materialeigenschaften nach folgenden Methoden bestimmt:
Schmelzindex (MVR) nach ISO 1133 bei 190 °C und 2.16 kg Auflagegewicht;
Zug-E-Modul nach ISO 527
Streckspannung nach ISO 527
Bruchdehnung nach ISO 527
Kerbschlagzähigkeit nach ISO 179-1/1eA

Formaldehydemission: Aus den eingefärbten POM-Formmassen werden Platten der Wandstärke 1 mm gefertigt. Nach einer Lagerdauer von 24 h wurde die Formaldehydemission aus den Platten nach VDA 275 ermittelt (VDA Empfehlung Nr. 275, Dokumentation Kraftfahrwesen e.V. Juli 1994).

Prüfkörperherstellung: Das Polyacetalgranulat wird durch Spritzguß zu Plättchen mit den Dimensionen 80*50*1 mm geformt. Eine Spritzgießmaschiene Kraus Maffei KM 120/340B wird mit folgenden Spritzgießparametern verwendet: Massetemperatur 195 °C, Fließfrontgeschwindigkeit 200 mmls, Werkzeugwandtemperatur 85 °C, Nachdruck 900 bar, Nachdruckzeit 30 s, Kühlzeit 10 s, Staudruck 0 bis 10 bar. Die Prüfkörper werden vor der Prüfung für 24 h im Norm-Klimaschrank bei 23 °C und 50 % relativer Luftfeuchte gelagert.

Prüfung: Zwei Prüfkörper werden in einer 1 I Glasflasche über 50 ml E-Wasser an einem Edelstahlhacken aufgehängt und für 3 h im Umlufttrockenschrank bei 60 °C gelagert. Die Prüfkörper werden aus der Prüfflasche entfernt. 5 ml Probenlösung werden in ein Reagenzglas pipettiert, das Reagenzglas wird für 10 Minuten bei 95 °C getempert. Nun werden 3 ml Acetylaceton und 3 ml einer 20 %igen Ammoniumacetatlösung in das Reagenzglas hinzugegeben. Der Formaldehyd bildet mit den Reagentien den Diacetyldihydrolutidin-Komplex, dessen Absorption bei 412 nm photometrisch bestimmt wird. Aus der Absorption wird die Formaldehyd-Konzentration in der Probenlösung berechnet.

In den Beispielen und Vergleichsbeispielen wurde als Polyoxymethylen Hostaform C 9021-Pulver verwendet. Bei den in Tab. 1 aufgeführten Versuchen enthielt das Polymer 3,4 % Dioxolan als Comonomer, als Initiator wurde BF₃ verwendet. In Vergleichsversuchen wurde zur Reduktion der Emission Eurelon der Firma Vantico, Deutschland und Dicyandiamid (DCD) verwendet.

### Beispiel 1:

Folgende Komponenten werden zusammengegeben und in einem Henschel-Mischer intensiv vermischt: 400 g Irganox 245, 50 g Melamin, 200 g Licowachs E, 100 g Magnesiumstearat, 20 kg PTFE Mikropulver (Dyneon TF 9201) ad 100 kg Polyoxymethylen Hostaform C 9021 Pulver. Die Mischung wird auf einem Zweischneckenextruder granuliert.

Die Komponenten für die Beispiele 2 bis 22 und die Vergleichsbeispiele 1 bis 21 wurden wie oben beschrieben vermischt und auf einem Zweischneckenextruder zu Granulat verarbeitet. Die Rezepturen der Beispiele und Vergleichsbeispiele sind in den Tabellen 1 und 2 angegeben.

Aus den Granulaten der Beispiele und Vergleichsbeispiele wurden im Spritgußverfahren die Prüfkörper für die Bestimmung des Zug-E-Moduls, der Streckspannung und der Bruchdehnung sowie die Platten zur Ermittlung der Formaldehydemission geformt. Die Ergebnisse der mechanischen Prüfungen und der Emissionsprüfung nach VDA 275 aus den erfindungsgemäßen Beispielen und aus den Vergleichsbeispielen sind in Tabelle 3 und 4 angegeben.

Die Beispiele zeigen, dass die Formaldehydemission durch Stabilisatorsysteme bestehend aus Melamin, Licowachs E und Mg-Stearat bzw. Licowachs OP stark verringert werden kann. Die Reduzierung der Formaldehydemission ist mit Stabilisatorsystemen aus Melamin und einer Kombination aus Licowachs E und Licowachs OP (Komponente (C1) und (C2)) besonders gut. Weiterhin zeigen die Ausführungsbeispiele das die Senkung der Formaldehydemission in Formmassen enthaltend oxidierbare tribologische Modifikatoren im besonderen überzeugt, so kann die Formaldehydemission bei Verwendung oxidierbarer Waches (GUR4120, PE-Wachs EWX) als tribologischer Modifikator um den Faktor 3 bis 5 gesenkt werden, dagegen wird bei der Verwendung von bereits oxidiertem Licowachs PED 191 als tribologischer Modifikator nur eine Reduktion der Emission um einen Faktor 2 bis 3 erzielt. Tabelle 1: Rezepturen

| Tabelle 1 | Irganox 1010 | Irganox 245 | Licowachs C | Tri-Calcium-citrat | DCD | Licowachs E | Mg-Stearat | Melamin | Licowachs OP | Eurelon | PTFE-Pulver | MoS₂-Pulver | Modiper A 1401 | Unister M9676 | Ca-Carbonat SL-101 |
|---|---|---|---|---|---|---|---|---|---|---|---|---|---|---|---|
| | [%] | [%] | [%] | [%] | [%] | [%] | [%] | [%] | [%] | [%] | [%] | [%] | [%] | [%] | [%] |
| Beispiel 1 | - | 0,4 | - | - | - | 0,2 | 0,1 | 0,05 | - | - | 20 | - | - | - | - |
| Beispiel 2 | - | 0,4 | - | 0,1 | - | 0,2 | 0,1 | 0,05 | - | - | 5 | - | - | - | - |
| Beispiel 3 | - | 0,4 | - | 0,1 | - | 0,1 | - | 0.05 | 0,1 | - | 20 | - | - | - | - |
| Vergleich 1 | - | 0,4 | 0,2 | 0,1 | 0,02 | - | - | - | - | - | 20 | - | - | - | - |
| Vergleich 2 | - | 0,4 | 0,2 | 0,1 | 0,02 | - | - | - | - | 0,05 | 5 | - | - | - | - |
| Beispiel 4 | 0,5 | - | - | - | - | 0,2 | 0,1 | 0,05 | - | - | - | 1 | - | - | - |
| Beispiel 5 | 0,5 | - | - | - | - | 0,1 | - | 0,05 | 0,1 | - | - | 1 | - | - | - |
| Vergleich 3 | 0,5 | - | - | - | - | - | 0,1 | - | - | - | - | 1 | - | - | - |
| Vergleich 4 | 0,5 | - | - | - | 0,3 | - | - | - | - | - | - | 1 | - | - | - |
| Vergleich 5 | 0,5 | - | - | - | 0,3 | - | - | 0,05 | - | 0,05 | - | 1 | - | - | - |
| Beispiel 6 | - | 0,4 | - | 0,1 | - | 0,2 | 0,1 | 0,05 | - | - | - | - | 5 | - | - |
| Beispiel 7 | - | 0,4 | - | 0,1 | - | 0,2 | 0,1 | 0,05 | - | 0,05 | - | - | 5 | - | - |
| Beispiel 8 | - | 0,4 | - | 0,1 | - | 0,1 | - | 0,05 | 0,1 | - | - | - | 5 | - | - |
| Vergleich 6 | - | 0,4 | 0,2 | 0,1 | - | - | - | - | - | 0,05 | - | - | 5 | - | - |
| Vergleich 7 | - | 0,4 | - | 0,1 | - | 0,2 | - | 0,05 | - | - | - | - | 5 | - | - |
| Beispiel 9 | 0,3 | - | - | 0,1 | - | 0,2 | 0,1 | 0,05 | - | - | - | - | 5 | 2 | 10 |
| Beispiel 10 | 0,3 | - | - | 0,1 | - | 0,1 | - | 0,05 | 0,1 | - | - | - | 5 | 2 | 10 |
| Vergleich 8 | 0,3 | - | - | 0,1 | 0,02 | - | - | - | - | - | - | - | 5 | 2 | 10 |
| Vergleich 9 | 0,3 | - | - | 0,1 | 0,2 | - | - | - | - | 0,05 | - | - | 5 | 2 | 10 |

**Tabelle 2: Rezepturen**

| Tabelle 2 | Irganox 245 | Licowachs C | Tri-Calcium-citrat | DCD | Licowachs E | Mg-Stearat | Melamin | Licowachs OP | Eurelon | Silikonöl 200 Fluid 30000 | Ca-Carbonat SL-101 | Licowachs PED 191 | GUR 4120 | Loxiol P 1206 | PE-Wachs EWX |
|---|---|---|---|---|---|---|---|---|---|---|---|---|---|---|---|
| | [%] | [%] | [%] | [%] | [%] | [%] | [%] | [%] | [%] | CS [%] | [%] | [%] | [%] | [%] | [%] |
| Beispiel 11 | 0,4 | - | 0,1 | - | 0,2 | 0,1 | 0,05 | - | - | 2 | - | - | - | - | - |
| Beispiel 12 | 0,4 | - | 0,1 | - | 0,1 | - | 0,05 | 0,1 | - | 2 | - | - | - | - | - |
| Vergleich 10 | 0,4 | 0,2 | 0,1 | 0,02 | - | - | - | - | - | 2 | - | - | - | - | - |
| Vergleich 11 | 0,4 | 0,2 | 0,1 | 0,02 | - | - | - | - | 0,05 | 2 | - | - | - | - | - |
| Beispiel 13 | 0,4 | - | 0,1 | - | 0,2 | 0,1 | 0,05 | - | - | - | 5 | | - | - | - |
| Beispiel 14 | 0,4 | - | 0,1 | - | 0,1 | - | 0,05 | 0,1 | - | - | 5 | - | - | - | - |
| Vergleich 12 | 0,4 | 0,2 | 0,1 | 0,02 | - | - | - | - | - | - | 5 | - | - | - | - |
| Vergleich 13 | 0,4 | 0,2 | 0,1 | 0,02 | - | - | - | - | 0,05 | - | 5 | - | - | - | - |
| Beispiel 15 | 0,3 | - | - | - | 0,2 | 0,1 | 0,05 | - | - | - | - | 1 | - | - | - |
| Beispiel 16 | 0,3 | - | - | - | 0,1 | - | 0,05 | 0,1 | - | - | - | 1 | | - | - |
| Vergleich 14 | 0,3 | 0,2 | 0,1 | | - | - | - | - | 0,05 | - | - | 1 | - | - | - |
| Vergleich 15 | 0,3 | 0,2 | 0,1 | 0,02 | - | - | - | - | 0,05 | - | - | 1 | - | - | - |
| Beispiel 17 | 0,2 | 0,7 | 0,05 | - | 0,2 | 0,1 | 0,05 | - | - | - | - | - | - | - | - |
| Beispiel 18 | 0,2 | 0,7 | 0,05 | - | 0,1 | - | 0,05 | 0,1 | - | - | - | - | - | - | - |
| Vergleich 16 | 0,2 | 0,7 | 0,05 | - | - | - | - | - | 0,05 | - | - | - | - | - | - |
| Vergleich 17 | 0,2 | 0,7 | 0,05 | 0,02 | - | - | - | - | 0,05 | - | - | - | - | - | - |
| Beispiel 19 | 0,4 | - | 0,1 | - | 0,2 | 0,1 | 0,05 | - | - | - | - | - | 10 | - | - |
| Beispiel 20 | 0,4 | - | 0,1 | - | 0,1 | - | 0,05 | 0,1 | - | - | - | - | 10 | - | - |
| Vergleich 18 | 0,4 | 0,2 | 0,1 | 0,02 | - | - | - | - | - | - | - | - | 10 | - | - |
| Vergleich 19 | 0,4 | 0,2 | 0,1 | 0,02 | - | - | - | - | 0,05 | - | - | - | 10 | - | - |
| Beispiel 21 | 0,3 | - | 0,1 | - | 0,2 | 0,1 | 0,05 | - | - | - | - | - | - | 1 | 1 |
| Beispiel 22 | 0,3 | - | 0,1 | - | 0,1 | - | 0,05 | 0,1 | - | - | - | - | - | 1 | 1 |
| Vergleich 20 | 0,3 | 0,2 | 0,1 | - | - | - | - | - | 0,05 | - | - | - | - | 1 | 1 |
| Vergleich 21 | 0,3 | 0,2 | 0,1 | 0,02 | - | - | - | - | 0,05 | | - | - | - | 1 | 1 |

**Tabelle 3: Eigenschaften von spritzgegossenen Zugstäben und Platten**

| **Tabelle 3** | MVR [ml/10 min] | Zug-E-Modul [N/mm²] | Streckspannung [N/mm²] | Bruchdehnung [%] | Kerbschlagzähigkeit [kJ/mm²) | VDA 275 [mg/kg] |
|---|---|---|---|---|---|---|
| Beispiel 1 | 6,0 | 2500 | 50 | 16 | 4,1 | 21,3 |
| Beispiel 2 | 7,2 | 2600 | 58 | 28 | 6,0 | 15,7 |
| Beispiel 3 | 5,9 | 2515 | 51 | 15 | 5,5 | 9,9 |
| Vergleichsbeispiel 1 | 6,2 | 2495 | 49 | 18 | 4,7 | 191 |
| Vergleichsbeispiel 2 | 7,5 | 2605 | 58 | 30 | 5,1 | 179 |
| Beispiel 4 | 8,5 | 2800 | 65 | 20 | 6,3 | 15,3 |
| Beispiel 5 | 8,3 | 2820 | 66 | 20 | 6,1 | 10,9 |
| Vergleichsbeispiel 3 | 8,5 | 2795 | 65 | 22 | 6,4 | 146 |
| Vergleichsbeispiel 4 | 8,6 | 2793 | 64 | 18 | 5,9 | 297 |
| Vergleichsbeispiel 5 | 8,7 | 2809 | 66 | 19 | 6,0 | 263 |
| Beispiel 6 | 8,0 | 2600 | 58 | 20 | 6,1 | 8,5 |
| Beispiel 7 | 8,0 | 2624 | 60 | 21 | 5,6 | 9,3 |
| Beispiel 8 | 8,1 | 2604 | 59 | 18 | 6,2 | 6,0 |
| Vergleichsbeispiel 6 | 7,8 | 2590 | 58 | 20 | 6,1 | 173 |
| Vergleichsbeispiel 7 | 8,1 | 2597 | 59 | 21 | 7,1 | 15,9 |
| Beispiel 9 | 6,8 | 2850 | 53 | 16 | 4,2 | 17,5 |
| Beispiel 10 | 7,0 | 2873 | 54 | 16 | 4,1 | 13,8 |
| Vergleichsbeispiel 8 | 7,1 | 2846 | 52 | 14 | 4,0 | 65,6 |
| Vergleichsbeispiel 9 | 6,9 | 2839 | 53 | 17 | 5,1 | 49,8 |

**Tabelle 4: Eigenschaften von spritzgegossenen Zugstäben und Platten**

| **Tabelle 4** | MVR [ml/10 min] | Zug-E-Modul [N/mm²] | Streckspannung [N/mm²] | Bruchdehnung [%] | Kerbschlagzähigkeit [kJ/mm²] | VDA 275 [mg/kg] |
|---|---|---|---|---|---|---|
| Beispiel 11 | 8,2 | 2600 | 51 | 30 | 5,3 | 12,5 |
| Beispiel 12 | 8,0 | 2607 | 52 | 25 | 6,0 | 10,0 |
| Vergleichsbeispiel 10 | 8,5 | 2590 | 50 | 33 | 5,5 | 34,5 |
| Vergleichsbeispiel 11 | 8,6 | 2599 | 50 | 31 | 4,9 | 29,3 |
| Beispiel 13 | 7,5 | 3000 | 60 | 22 | 5,2 | 15.0 |
| Beispiel 14 | 7,8 | 2930 | 59 | 25 | 5,0 | 12,8 |
| Vergleichsbeispiel 12 | 7,3 | 3051 | 61 | 20 | 5,4 | 43,7 |
| Vergleichsbeispiel 13 | 7,5 | 3010 | 61 | 21 | 4,8 | 40,4 |
| Beispiel 15 | 8,6 | 2700 | 62 | 30 | 7,0 | 9,3 |
| Beispiel 16 | 9,1 | 2721 | 64 | 28 | 7,2 | 6,5 |
| Vergleichsbeispiel 14 | 8,9 | 2690 | 62 | 32 | 6,8 | 18,7 |
| Vergleichsbeispiel 15 | 9,0 | 2700 | 63 | 31 | 7,1 | 15,6 |
| Beispiel 17 | 8,2 | 2800 | 64 | 25 | 6,5 | 8,4 |
| Beispiel 18 | 8,0 | 2730 | 65 | 22 | 6,8 | 4,9 |
| Vergleichsbeispiel 16 | 7,9 | 2764 | 64 | 24 | 5,9 | 15,3 |
| Vergleichsbeispiel 17 | 7,8 | 2810 | 65 | 23 | 6,3 | 12,6 |
| Beispiel 19 | 5,5 | 2300 | 45 | 10 | 3,5 | 12,6 |
| Beispiel 20 | 5,3 | 2390 | 43 | 8 | 3,7 | 9,7 |
| Vergleichsbeispiel 18 | 5,6 | 2350 | 44 | 12 | 3,8 | 41,5 |
| Vergleichsbeispiel 19 | 5,5 | 2290 | 41 | 11 | 3,5 | 36,9 |
| Beispiel 21 | 11,8 | 2700 | 61 | 28 | 7,0 | 25,7 |
| Beispiel 22 | 13,0 | 2650 | 60 | 30 | 6,8 | 31,8 |
| Vergleichsbeispiel 20 | 9,9 | 2630 | 61 | 28 | 6,5 | 117,8 |
| Vergleichsbeispiel 21 | 10,3 | 2670 | 59 | 31 | 6,6 | 95,2 |

## Patentansprüche

1. Verwendung eines Stabilisatorsystems, enthaltend
(B) 0.01 - 0.5 Gew. % einer heterozyklischen Verbindung mit mindestens einem Stickstoffatom im Ring enthält und
(C) 0.05 - 1 Gew. % mindestens eines Esters aus einem mehrwertigen Alkohol und mindestens einer (C₁₀-C₃₂)-Fettsäure
zur Reduktion der Formaldehydemission aus Polyoxymethylen-Formmassen oder -Formteilen für tribologische Anwendungen, wobei die Polyoxymethylen-Formmassen oder -Formteile 0.1 - 50.0 Gew. % eines tribologischen Modifikators (A) enthalten, der ausgewählt ist aus der Gruppe der Polytetrafluorethylene, der Molybdänsulfide, der Calciumcarbonate, der Pfropf-Copolymere, die ein Olefinpolymer als Pfropfgrundlage und darauf aufgepfropft mindestens ein Polymer aus der Gruppe der Polyvinyle und Polyether enthalten, der Pfropf-Copolymere, die einen kautschukelastischen Kern auf Basis eines Polydiens und eine harte Pfropfhülle aus einem (Meth)acrylat und/oder (Meth)acrylnitril aufweisen, der ultrahochmolekulares Polyethylen-Pulver, der Stearylstearate, der Esterwachse aus einer Fettsäure und einem einwertigen Alkohol, der Polyethylenwachse, der Amidwachse oder einer Mischung der genannten Modifikatoren.

2. Verwendung nach Anspruch 1 **dadurch gekennzeichnet, dass** die Formmasse oder das Formteil zusätzlich bis zu 0.5 Gew. % eines Metallsalzes einer (C₁₀-C₃₂)-Fettsäure (Komponente (D)) enthält.

3. Verwendung nach Anspruch 1 oder 2 **dadurch gekennzeichnet, dass** die Komponente (C) eine Mischung enthaltend
(C1) x Gew. % eines unverseiften Esters aus einem mehrwertigen Alkohol und mindestens einer (C₁₀-C₃₂)-Fettsäure und
(C2) y Gew. % eines teilverseiften Esters eines mehrwertigen Alkohols und mindestens einer (C₁₀-C₃₂)-Fettsäure,
wobei x größer als 0.01 Gew.-%, y kleiner als 0.99 Gew.-% und die Summe aus x und y kleiner als 1.0 Gew.-% ist.

4. Verwendung nach Anspruch 3, **dadurch gekennzeichnet, dass** der Wert von x und y unabhängig voneinander zwischen 0,03 Gew. % und 0,5 Gew. % liegt.

5. Verwendung nach einem der Ansprüche 1 bis 4, **dadurch gekennzeichnet, dass** das Formteil oder die Formmasse bis zu 1.0 Gew. % eines Antioxidationsmittels enthält.

6. Verwendung nach einem der Ansprüche 1 bis 4, **dadurch gekennzeichnet, dass** das Formteil oder die Formmasse 0 bis 1 Gew. %, eines Metallsalzes einer (C₁-C₉)-Carbonsäure, 0 bis 1.0 Gew. % mindestens eines weiteren Stabilisators aus der Gruppe der Benzotriazolderivate oder Benzophenonderivate oder aromatische Benzoatderivate, 0 bis 0.5 Gew. % eines sterisch gehinderten Amins (HALS) enthält.

7. Verwendung eines Stabilisatorsystems gemäß Anspruch 1 zur Reduktion der Formaldehydemission auf unter 20 mg/kg gemessen nach der VDA Empfehlung Nr. 275.

## Claims

1. Use of a stabilizer system comprising
(B) from 0.01-0.5% by weight of a heterocyclic compound having at least one nitrogen atom in the ring, and
(c) from 0.05 to 1% by weight of at least one ester formed from a polyhydric alcohol and at least one C₁₀-C₃₂) fatty acid
for reduction of the formaldehyde emission from polyoxymethylene molding compositions or molded parts for tribological applications, wherein said polyoxymethylene molding compositions or molded parts contain from 0.1 to 50.0% by weight of a tribological modifier (A) selected from the group of polytetrafluoroethylenes, molybdenum sulfides, calcium carbonates, graft copolymers which contain an olefin polymer as graft base and, grafted onto this, at least one polymer from the group of polyvinyls and polyethers, graft copolymers which contain an elastomeric core based on a polydiene and a hard graft envelope composed of a (meth)acrylate and/or (meth)acrylonitrile, ultrahigh-molecular-weight polyethylene powders, stearyl stearates, ester waxes formed from a fatty acid and a monohydric alcohol, polyethylene waxes, amide waxes, or a mixture of the modifiers mentioned.

2. The use according to claim 1, **characterized in that** said molding composition or molded part additionally contains up to 0.5% by weight of a metal salt of a (C₁₀-C₃₂) fatty acid (component D)).

3. The use according to claim 1 or 2, **characterized in that** component (C) is a mixture comprising
(C1) x% by weight of an unsaponified ester formed from a polyhydric alcohol and at least one (C₁₀-C₃₂) fatty acid, and
(C2) y% by weight of a partially saponified ester of a polyhydric alcohol and at least one (C₁₀-C₃₂) fatty acid,
where x is greater than 0.01% by weight, y is smaller than 0.99% by weight, and the total of x and y is smaller than 1.0% by weight.

4. The use according to claim 3, **characterized in that** the values of x and y are independently from 0.03% by weight to 0.5% by weight.

5. The use according to any of claims 1 to 4, **characterized in that** said molded part or molding composition contains up to 1.0% by weight of an antioxidant.

6. The use according to any of claims 1 to 4, **characterized in that** said molded part or molding composition contains from 0 to 1% by weight of a metal salt of a (C₁-C₉) carboxylic acid, from 0 to 1.0% by weight of at lest one other stabilizer from the group of benzotriazole derivatives or benzophenone derivatives or aromatic benzoate derivatives, and from 0 to 0.5% by weight of a sterically hindered amine (HALS).

7. The use of a stabilizer system according to claim 1 for reduction of the formaldehyde emission to less than 20 mg/kg as measured according to the VDA Recommendation No. 275.

## Revendications

1. Utilisation d'un système stabilisateur, contenant
(B) 0,01 à 0,5 % en poids d'un composé hétérocyclique ayant au moins un atome d'azote dans le cycle et
(C) 0,05 à 1% en poids d'au moins un ester formé à partir d'un alcool polyvalent et au moins un acide gras en C₁₀-C₃₂
pour réduire l'émission de formaldéhyde provenant de masses de moulage ou de pièces moulées en polyoxyméthylène pour des applications tribologiques, dans laquelle lesdites masses de moulage ou pièces moulées en polyoxyméthylène contiennent 0,1 à 50,0% en poids d'un modificateur tribologique (A) choisi dans le groupe consistant en polytétrafluoroéthylènes, sulfures de molybdène, carbonates de calcium, copolymères greffés contenant un polymère d'oléfine en tant que base de greffage et, greffé dessus, au moins un polymère du groupe des polymères vinyliques et des polyéthers, copolymères greffés contenant un noyau en élastomère à base d'un polydiène et une enveloppe greffée, rigide, constituée d'un (méth)acrylate et/ou (méth)acrylonitrile, poudres de polyéthylène de poids moléculaire ultra-élevé, stéarates de stéaryle, cires d'ester d'un acide gras et d'un alcool monovalent, cires de polyéthylène, cires d'amide, ou un mélange des modificateurs susmentionnés.

2. Utilisation selon la revendication 1, **caractérisée en ce que** la masse de moulage ou la pièce moulée contient en outre jusqu'à 0,5% en poids d'un sel métallique d'un acide gras en C₁₀-C₃₂ (composant (D)).

3. Utilisation selon la revendication 1 ou 2, **caractérisée en ce que** le composant (C) est un mélange contenant
(C1) x% en poids d'un ester non saponifié d'un alcool polyvalent et d'au moins un acide gras en C₁₀-C₃₂ et
(C2) y% en poids d'un ester partiellement saponifié d'un alcool polyvalent et d'au moins un acide gras en C₁₀-C₃₂,
dans laquelle x est plus de 0,01% en poids, y est moins de 0,99% en poids, et la somme de x et de y est moins de 1,0% en poids.

4. Utilisation selon la revendication 3, **caractérisée en ce que** les valeurs de x et de y sont indépendamment comprises entre 0,03% en poids et 0,5% en poids.

5. Utilisation selon l'une quelconque des revendications 1 à 4, **caractérisée en ce que** la pièce moulée ou la masse de moulage contient jusqu'à 1,0% en poids d'un antioxydant.

6. Utilisation selon l'une quelconque des revendications 1 à 4, **caractérisée en ce que** la pièce moulée ou la masse de moulage contient 0 à 1% en poids d'un sel métallique d'un acide carboxylique en C₁-C₉, 0 à 1,0% en poids d'au moins un autre stabilisateur du groupe des dérivés de benzotriazole ou des dérivés de benzophénone ou des dérivés de benzoate aromatiques, et 0 à 0,5% en poids d'une amine à encombrement stérique (HALS).

7. Utilisation d'un système stabilisateur selon la revendication 1 pour réduire l'émission de formaldéhyde à moins de 20 mg/kg, mesurée conformément à la recommandation VDA n° 275.
